# EUROPÄISCHE PATENTSCHRIFT

(11) **EP 0 755 109 B1**
(45) Veröffentlichungstag und Bekanntmachung des Hinweises auf die Patenterteilung: **15.03.2000**
(21) Anmeldenummer: 96810435.6
(22) Anmeldetag: 01.07.1996
(51) Int. Cl.: H02K 1/18, H02K 5/20

(54) **Rohrgenerator**
Tubular generator
Générateur tubulaire

(30) Priorität: 21.07.1995 DE 19526689
(43) Veröffentlichungstag der Anmeldung: 22.01.1997
(73) Patentinhaber: ASEA BROWN BOVERI AG, 5400 Baden (CH)
(72) Erfinder: Schwanda, Josef, 5242 Lupfig (CH)
(74) Vertreter: Kaiser, Helmut, Dr.

(56) Entgegenhaltungen:
- EP-A- 0 046 315
- FR-A- 522 820
- FR-A- 772 159
- FR-A- 2 613 148
- US-A- 2 611 797
- PATENT ABSTRACTS OF JAPAN vol. 005, no. 181 (E-083), 20.November 1981 & JP 56 107767 A (HITACHI LTD), 26.August 1981,
- PATENT ABSTRACTS OF JAPAN vol. 007, no. 258 (E-211), 17.November 1983 & JP 58 144549 A (TOKYO SHIBAURA DENKI KK), 27.August 1983,
- PATENT ABSTRACTS OF JAPAN vol. 008, no. 074 (E-236), 6.April 1984 & JP 58 222747 A (HITACHI SEISAKUSHO KK), 24.Dezember 1983,

## Beschreibung

### TECHNISCHES GEBIET

Die Erfindung bezieht sich auf einen Rohrgenerator mit einem aus einer Kalotte und daran anschliessendem Gehäusering bestehendem Gehäuse, mit einem Statorblechkörper, der von dem Gehäusering umgeben und in diesem gehalten ist, der Statorblechkörper aus überlappend geschichteten Blechsegementen aufgebaut ist und mittels axial verlaufenden Leisten unter Zwischenschaltung von Distanzelementen an dem vom Triebwasser umspülten Gehäusering befestigt ist, wobei der Statorblechkörper aus einer Mehrzahl von gegeneinander distanzierten Teilblechkörpern besteht und durch die Distanzen zwischen den einzelnen Teilblechkörpern radial nach aussen Kühlluft in den Raum zwischen Statorblechkörper und Gehäusering und von dort aus zu Kühlern in der Kalotte führbar ist.

Die Erfindung geht dabei aus von einem Rohrgenerator, wie er beispielsweise aus der EP-0 413 708 B1 bekannt ist.

### TECHNOLOGISCHER HINTERGRUND UND STAND DER TECHNIK

Bei Rohrgeneratoren, auch Rohrturbinen-Generatoren genannt, kleiner und mittlerer Leistung wird aus konstruktiven Gründen der aus überlappend geschichteten Blechsegementen aufgebaute Statorblechkörper unmittelbar an dem vom Triebwasser umspülten Gehäusering befestigt. Um die Wärmeabfuhr vom Statorblechkörper über den Gehäusering an das Triebwasser zu erhöhen, wird in der eingangs genannten Patentschrift in den konstruktiv und fertigungsbedingten Spalt zwischen Statorblechkörper und Gehäusring ein elastisch verformbarer Werkstoff mit guter Wärmeleitfähigkeit eingebracht.

Bei Rohrgeneratoren grösserer Leistung und Gehäuseringdurchmessern von 8 Metern und mehr treten im Gehäuse infolge Gehäuseschrumpfung durch das kalte Flusswasser und durch Blechkörpervergrösserung infolge Erwärmung beim Betrieb der Maschine mechanische Spannungen auf, die mit elastisch verformbarem Werkstoff allein nicht beherrscht werden können. Hinzu kommen magnetische Kräfte, welche die Rundhaltung des Statorblechkörpers negativ beeinflussen.

Man ist daher bei grossen Rohrgeneratoren dazu übergegangen, den Statorblechkörper von der Innenwand des Gehäusrings zu distanzieren und durch den so entstehenden Spalt ein Kühlmittel im geschlossenen Kreislauf hindurchzuleiten. Derartige Anordnungen werden in der Literatur mit Oberflächen-Ringkühler oder Spaltkühler bezeichnet. Die zugehörigen Luft-Wasser-Kühler bzw. Wasser-Wasser-Kühler befinden sich dabei in der Kalotte des Rohrgenerators. Während bei Kühlanordnungen mit Luft als Kühlmittel sich keine besonderen Probleme ergeben, muss bei Wasserkühlung der vom Kühlwasser durchflossene Spalt gegenüber dem Statorblechkörper abgedichtet werden.

### KURZE DARSTELLUNG DER ERFINDUNG

Der Erfindung liegt die Aufgabe zugrunde, einen Rohrgenerator zu schaffen, der auch bei grossen Gehäuseringdurchmessern eine steife und allen thermischen und magnetischen Beanspruchungen gewachsene Statoraufhängung ermöglicht und optimal gekühlt werden kann.

Diese Aufgabe wird erfindungsgemäss durch die Merkmale des Anspruchs 1 gelöst.

Der Vorteil der Erfindung ist insbesondere darin zu sehen, dass die Hohlkörper wesentlich zur Versteifung des Gehäuserings beitragen. Vorzugsweise weisen die Hohlkörper V-förmigen Querschnitt auf, wobei die freien Schenkelenden benachbarter Hohlkörper dicht an dicht liegen. Diese Struktur erhöht die Oberfläche des Gehäuserings, so dass die aus den radialen Kühlschlitzen zwischen den Teilblechkörpern in den Statorrücken ausströmende Kühlluft schon vor den eigentlichen, in der Kalotte angeordneten Kühlern abgekühlt wird, so dass ein Teil der Verlustwärme der Maschine bereits beim Ueberstreichen der durch die Hohlkörper vergrösserten Gehäusewand an das Flusswassser abgegeben wird..

Die Erfindung eignet sich sich sowohl für reine Luftkühlung als auch für eine kombinierte Wasser-Luftkühlung:

Bei reiner Luftkühlung dienen die Hohlkörper der geordneten Abfuhr der aus dem Statorblechkörper radial nach aussen strömenden Luft, indem diese auf der gesamten Eisenlänge mit ersten Oeffnungen versehen sind, in welche die (erwärmte) Luft im wesentlichen radial einströmt und dann im Inneren der Hohlkörper axial zu beiden Maschinenstirnseiten strömt. Ausserhalb der Eisenlänge sind die Hohlkörper mit zweiten Oeffnungen versehen, durch welche die nunmehr schon teilweise abgekühlte Luft die Hohlkörper wieder verlässt und in den Wickelkopfraum einströmt, dort den Wickelkopf und die Wicklungsverbindungen umströmt, schliesslich gesammelt und dann den Kühlern in der Kalotte zugeführt wird.

Die Aufteilung der zu beiden Seiten hinströmenden Luft erfolgt dabei vorzugsweise so, dass der Grossteil zum kalottenseitigen Ende der Maschine strömt. Diese mengenmässige Aufteilung kann in einfacher Weise durch die Grösse der Durchtrittsfläche der zweiten Oeffnungen erfolgen.

Bei kombinierter Wasser-Luft-Kühlung sind keine Oeffungen in den Hohlkörpern vorgesehen. Die Hohlkörper sind axial gesehen ausserhalb des Statorblechkörpers derart untereinander mittels Kanälen derart (hydraulisch) verbunden, dass Kühlwasser mäanderförmig durch alle Hohlkörper strömt. Auch diese Massnahme erhöht die aktive Kühloberfläche des Gehäuserings, ohne dass besondere Wasser-Wasser- oder Wasser-Luft-Kühler in der Kalotte notwendig sind. Dabei strömt die aus dem Statorblechkörper kommende (erwärmte) Luft nach wie vor in den Statorrücken

Bei extremen Bedingungen, z.B. hohen Flusswasser-Temperaturen, kann der Kühlwasserkreislauf durch besondere Kühler in der Kalotte erweitert werden.

Ausführungsbeispiele der Erfindung sowie weitere damit erzielbare Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen vereinfachten Längsschnitt durch den Stator eines Rohrgenerators;
- Fig.2: das Detail X aus Fig.1;
- Fig.3: einen Querschnitt durch den Stator gemäss Fig.1 längs deren Linie AA mit V-förmigen Hohlkörpern als Distanzelement für reine Luftkühlung;
- Fig.3a: das Detail X aus Fig.3 in vergrössertem Massstab;
- Fig.4: eine Draufsicht auf die (abgewickelte) Innenwand des mit Hohlkörpern nach Fig.3 versehenen Gehäuserings des Rohrgenerators nach Fig.l bzw. 3;
- Fig.5: in Abwandlung zu Fig.3 eine Draufsicht auf die Innenwand eines mit Hohlkörpern nach Fig.6 versehenen Gehäuserings, ausgestaltet für Wasserkühlung;
- Fig.6: einen Querschnitt durch die Hohlkörper gemäss Fig.6 längs deren Linie BB;
- Fig.7: eine Abwandlung von Fig.3 mit trapezförmigen Hohlkörpern als Distanzelementen;
- Fig.8: eine Abwandlung von Fig.3, bei der zwischen Statorblechkörper und Distanzelementen Federglieder angeordnet sind.

### WEGE ZUR AUSFÜHRUNG DER ERFINDUNG

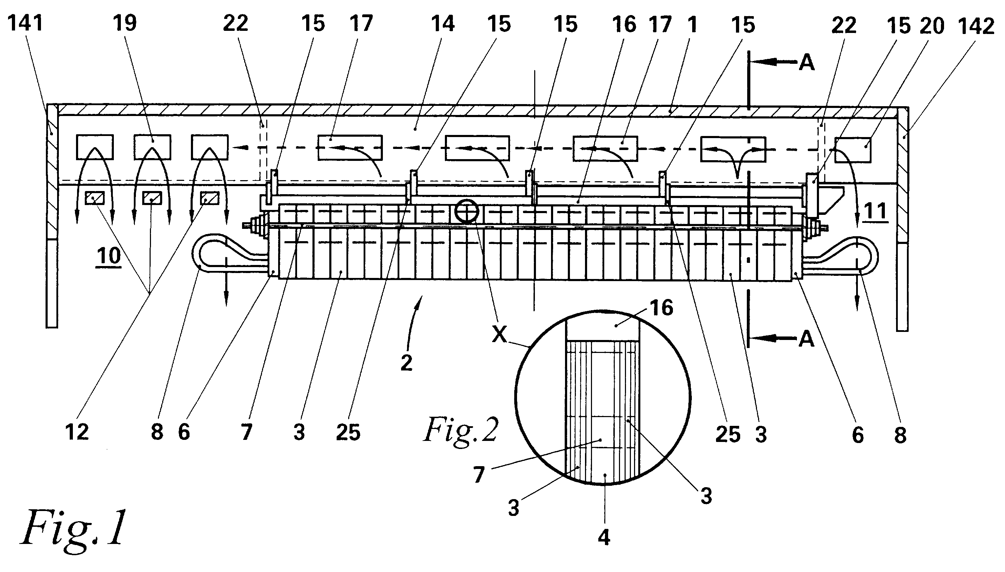

Mit Ausnahme der Abstützung und Distanzierung entspricht der in Fig.1 schematisch dargestellte Rohrgenerator weitgehend dem Stand der Technik, wie er sich beispielsweise aus den "Brown Boveri Mitteilungen" 4-70, Seiten 182 bis 190, insbesondere Bild 5 auf Seite 186, ergibt. Der Rohrgenerator umfasst ein Gehäuse, von dem in Fig.l lediglich der Gehäusering 1 dargestellt ist. Die sich nach links anschliessende Kalotte, in welcher u.a. auch der oder die Kühler untergebracht sind, und der sich nach rechts anschliessende Turbinenteil sind ebenso wie die Lagerung nicht gezeichnet. Sie entsprechen dem Aufbau nach Bild 5 der genannten Veröffentlichung BROWN BOVERI Mitt.

Der Stator 2 umfasst einen aus axial beabstandeten Teilblechkörpern 3 aufgebauten Statorblechkörper mit radial verlaufenden Kühlschlitzen 4 (vgl. Detail X in Fig.2). Die Teilblechkörper 3 sind in bekannter Weise aus aufeinandergestapelten Blechsegmenten 5, die lagenweise versetzt sind, aufgebaut und durch Pressplatten 6 und axiale Zugbolzen 7 zusammengepresst. Die Statorwicklung, von der in Fig.l nur die Wickelköpfe 8 an beiden Stirnseiten sichtbar sind, ist in Nuten 9 untergebracht. Im kalottenseitigen Wickelkopfraum 10 sind die Wicklungsverbindungen 12 und Ableitungen angedeutet.

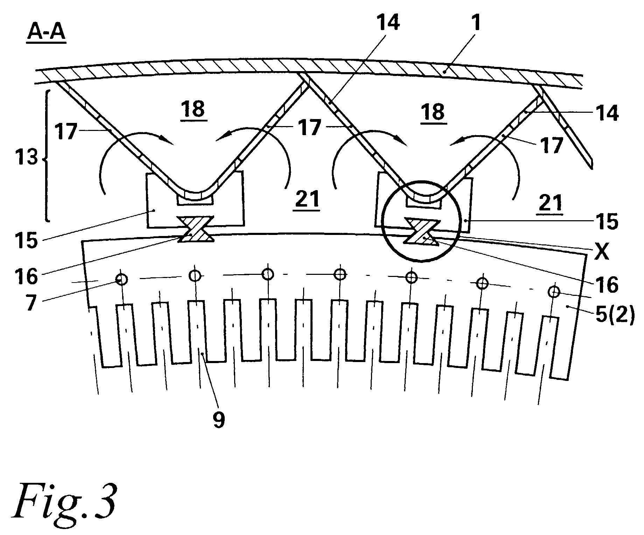

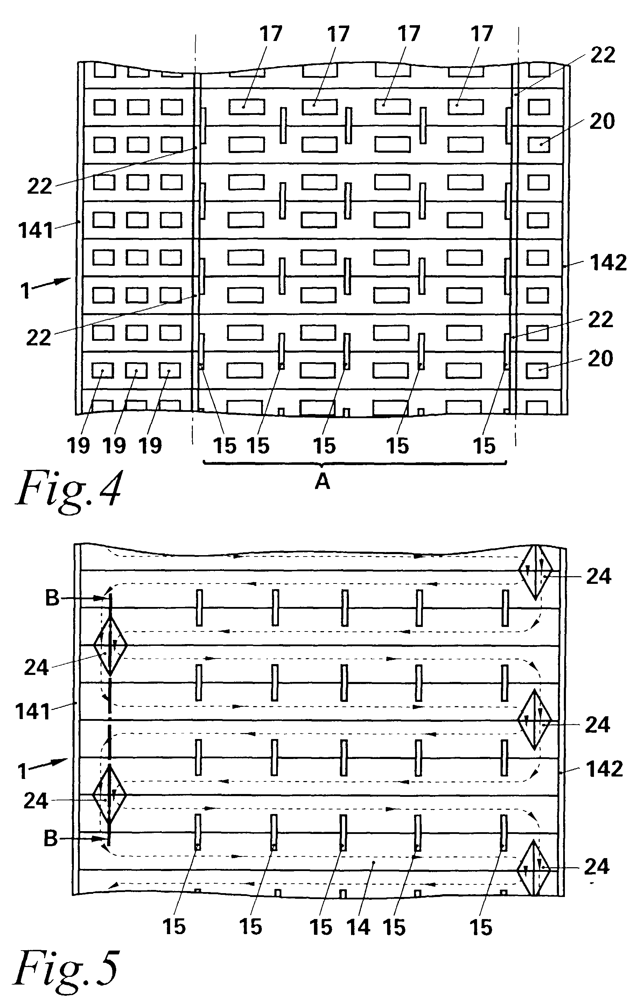

Der Statorblechkörper 2 ist vom Gehäusering 1 distanziert In dem so gebildeten Ringraum 13 zwischen diesen beiden Teilen sind V-förmige Distanzelemente 14 angeordnet. Die Distanzelemente 14 erstrecken sich über den gesamten Innenumfang des Gehäuserings 1 und sind endseitig durch Ringe 141, 142 abgedeckt. Diese Ringe dienen gleichzeitig als Befestigungsflansche für die Kalotte bzw. das Turbinengehäuse. Die Distanzelemente 14 bilden zusammen mit dem Gehäusering 1 Hohlkörper in Form axial verlaufenden Kanäle. Die freien Schenkelenden der Distanzelemente 14 sind an der Innenseite des Gehäuserings 1 angeschweisst, wobei benachbarte Schenkel dicht an dicht liegen. Am Scheitel jedes Distanzelements 14 ist eine Befestigungsplatte 15 befestigt, die radial innen eine schwalbenschwanzförmige Ausnehmung aufweist (vgl. Fig.3). Wie aus Fig.1 und die in Fig.4 dargestellt Abwicklung des mit Distanzelemente 14 versehenen Gehäuserings 1 hervorgeht, sind an jedem Distanzelement 14 mehrere, in Maschinenlängsrichtung gleichmässig verteilte Befestigungsplatten 15 vorgesehen. Die einem Distanzelement 14 zugeordneten Ausnehmungen fluchten miteinander. Sie nehmen Leisten 16 auf mit doppelschwalbenschwanzförmigen Querschnitt, die sich über die gesamte Länge des Statorblechkörpers 2 erstrecken. Die einzelnen Blechsegmente 5 weisen ebenfalls schwalbenschwanzförmige Ausnehmungen auf. Beim Schichten des Statorblechkörpers werden die Blechsegmente 5 von einer Seite - im Beispielsfall vom kalottenseitigen Ende her über die Leisten 16 geschoben. Die Distanzierung der einzelnen Teilblechkörper 3 erfolgt in bekannter Weise durch Zwischenlage von radial gerichteten Distanzstreifen (in der Zeichnung nicht dargestellt).

Aus Montagegründen und zur Erleichterung der Justierung erfolgt die Verbindung zwischen den V-förmigen Distanzelementen 14 bzw. Befestigungsplatten 15 und den Leisten 16 nicht direkt, sondern unter Einschaltung einer Zwischenplatte 151, die (im Endzustand) mit der Befestigungsplatte 15 fest verbunden, z.B. verschweisst ist (vgl. Detail X aus Fig.3 in Fig.3a). Diese weist an ihrer radial innenliegenden Seite eine trapezförmige Nut 152 auf, in welcher die Leiste 16 etwa zur Hälfte liegt. Die Nuttiefe ist dabei so bemessen, dass sich zwischen Nutgrund und der Aussenfläche der Leiste 16 ein Spalt 153 mit einer Breite d₁ von etwa 1 bis 2 mm ergibt. Die Zwischenplatte 151 darf dabei nicht bis an den Statorblechkörper anstossen, d.h. der Spalt 153 muss kleiner sein als der Spalt S zwischen Blechkörper und Zwischenplatte 151. Warmer Blechkörper und kaltes Gehäuse haben auf diese Weise die Möglichkeit, sich zu bewegen bis dieses Spiel (Spalt 153) aufgehoben ist. Erst bei weiterer Dehnung ergibt sich ein Presssitz zwischen Zwischenplatte 151 und Leiste 16. Damit nun in dieser Phase die Rundhaltung des Blechkörpers gewährleistet ist, sind in Umfangsrichtung wirkenden Führungselemente vorgesehen. Diese bestehen aus einer aus dem Nutgrund der Nut 152 radial nach innen weisenden Nase 154 mit parallelen Seitenflanken an der Zwischenplatte 151, die in eine rechteckförmige Nut 161 an der radial aussenliegenden Fläche der Leiste formschlüssig eingreift. Dabei ist die Nuttiefe wiederum so bemessen, dass ein Spalt 162 mit der Breite d₂ zwischen ver Nase 154 und dem Nutgrund der Nut 161 von 1 bis 2 mm verbleibt.

Dies beschriebene indirekte Verbindung zwischen den Distanzelementen 14 und dem Statorblechkörper erleichtert die Montage und Justierung des Statorblechkörpers gegenüber dem Gehäuse. Sie erfüllt darüber hinaus zwei wesentliche Anforderungen, die typisch sind für Rohrgeneratoren:
- sie gewährleistet die freie radiale Dilatationsmöglichkeit (warmer Blechkörper/kaltes vom Flusswasser umspültes Gehäuse;
- radiale Steifigkeit unter der Einwirkung von magnetischen Kräften (4-Knotenschwingung) bei einem Störfall.

Wie aus Fig.3 ohne weiteres erhellt, versteifen die sich über den gesamten Innenumfang des Gehäuserings erstreckenden Distanzelemente 14 den Gehäusering vergleichbar einem Fachwerk. Diese Fachwerkkonstruktion wird durch den Statorblechkörper 2, der in die doppelschwalbenschwanzförmigen Leisten eingehängt ist, zusätzlich verstärkt. Die Befestigungsplatten 15, die vorzugsweise durch Laserschneiden aus Blechen hergestellt werden, dienen gleichzeitig als Einstellelemente und werden unter Zuhilfenahmen einer Lehre an den Distanzelementen 14 angeschweisst. Auf diese Weise entfällt das aufwendige Ausdrehen des Gehäuses vor dem Schichten des Statorblechkörpers.

Obschon durch den Einbau der Distanzelemente 14 sich eine Vergrösserung der inneren Oberfläche des aussen vom Flusswasser umströmten Gehäuserings ergibt, kann das Statorgehäuse kann nun erfindungsgemäss bei nahezu gleichbleibender Konstruktion luftgekühlt oder auch wassergekühlt werden.

Bei Luftkühlung sind in den Schenkeln der Distanzelemente 14 im Bereich des Statorblechkörpers 2 erste Oeffungen 17 vorgesehen, welche eine freie Verbindung zwischen den radialen Kühlschlitzen 4 im Statorblechkörper 2 und den Hohlräumen 18 der Distanzelemente 14 herstellen. Durch diese Oeffnungen 17 und besagte Hohlräume 18 kann nun die aus dem Statorblechkörper 2 austretende (erwärmte) Kühlluft zu den beiden Maschinenstirnseiten abgeführt werden. Weil diese axialen Kanäle unmittelbar an den Gehäusering und damit an das Flusswasser angrenzen, wird diese Luft bereits auf dem Weg zu den Maschinenstirnseiten heruntergekühlt.

An beiden Stirnseiten und ausserhalb des Aktivteils A sind in den Schenkeln der Distanzelemente 14 zweite Oeffnungen 19 bzw. 20 vorgesehen, über die die Luft die genannten Kanäle wieder verlässt. Diese bereits schon um einiges herabgekühlte Luft durchströmt auf den Weg zu den Kühlern in der Kalotte den Wickelkopf 8 und auch die thermisch hochbeanspruchten Wicklungsverbindungen und Ableiter 12. Die Aufteilung der Kühhluft auf beide Maschinenseiten erfolgt dabei durch die Grösse der Durchtrittsflächen der zweiten Oeffungen 19 bzw. 20. Die Abschottung des Aussenraumes 21 der Distanzelemente 14, in den zunächst die den Statorblechkörper 2 ausströmende Luft einströmt, gegenüber den Wickelkopfräumen 10 und 11 erfolgt durch dreickförmige Dichtplatten 22.

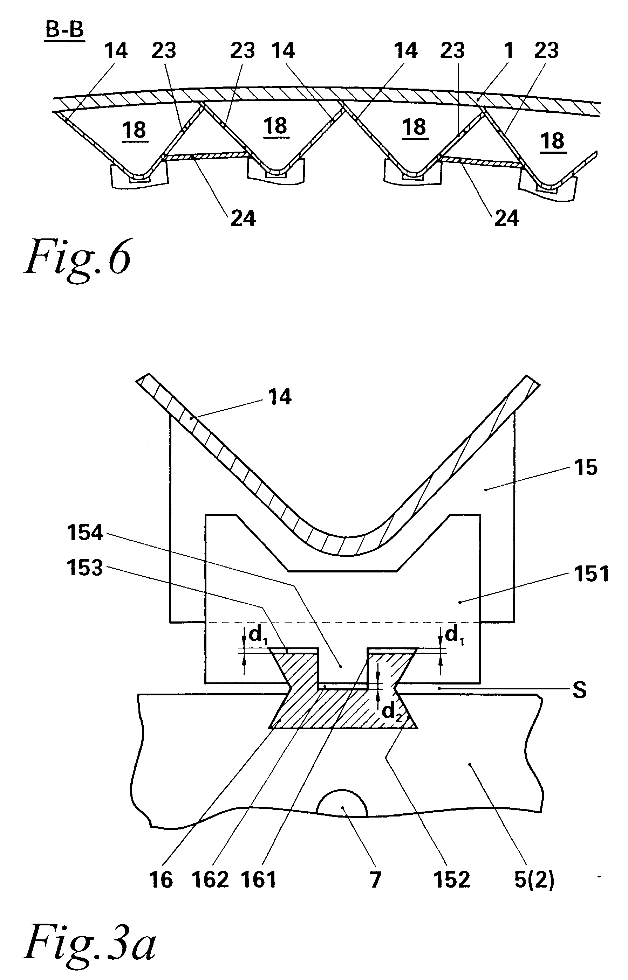

Bei Wasserkühlung entfallen sowohl die ersten als auch die zweiten Oeffnungen 17 bzw. 19 in den Schenkeln der Distanzelemente 14. Dafür sind die durch die Distanzelemente 14 und den Gehäusering begrenzten Kanäle oder Hohlräume 18 abwechselnd an einem Ende nahe den Flanschringen 141 und 142 hydraulisch verbunden, so dass in ihnen Kühlwasser mäanderförmig im Statorgehäuse zirkulieren kann (vgl. Fig.5). Zu diesem Zweck sind an den besagten Ende im Beispielsfall dreiecksförmige Durchbrüche 23 vorgesehen, denen eine benachbarte Schenkel der Distanzelemente 14 verbindende dachartigen Abdeckung 24 zugeordnet ist (vgl. Fig.6). Damit ergibt sich den in Fig.5 durch strichlierte Linien eingezeichnete mäanderförmige Kühlwasserfluss.

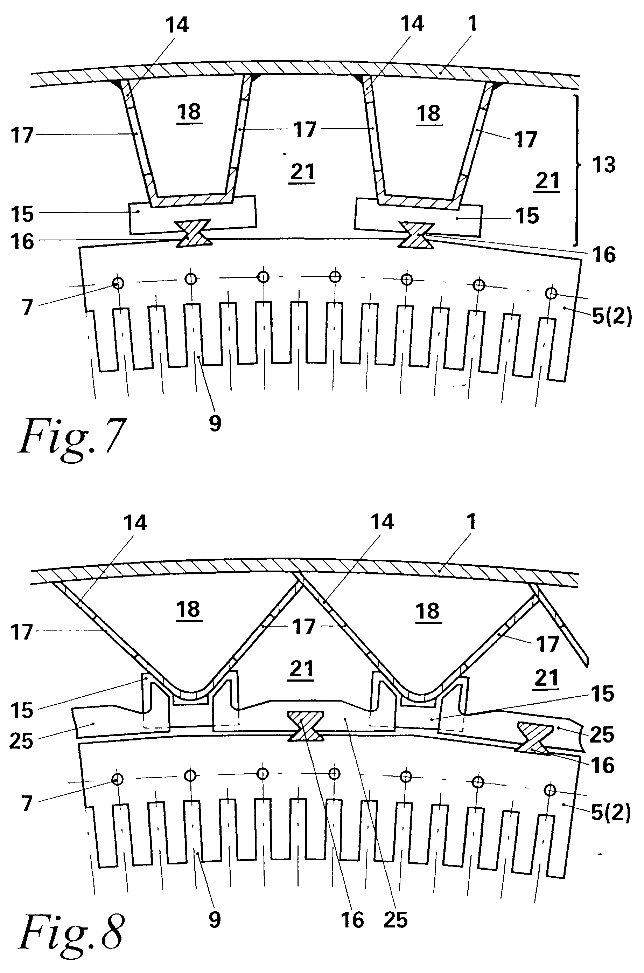

Wie in Fig.7 veranschaulicht ist, können die Distanzelemente 14 auch trapezförmigen Querschnitt aufweisen, wobei die breitere Basis aussen liegt. Die freien Schenkelenden sind dann im Gegensatz zur Variante mit V-förmigen Distanzelementen deutlich voneinander beabstandet. Ansonsten entspricht der Aufbau und die Funktion der in Fig.7 dargestellten Variante dem bisher Beschriebnenen.

Sollte es sich aus betrieblichen oder sonstigen Gründen als notwendig erweisen, den Statorblechkörper 2 radial elastisch in dem versteiften Gehäusering 1 aufzuhängen, kann dies ohne den durch die Erfindung gesteckten Rahmen und durch einfache konstruktive Massnahmen erreicht werden, die sowohl für die luftgekühlte als auch die wassergekühlte Gehäusekühlung verwendet werden können.

In Fig.8 sind die doppelschwalbenschwanzförmigen Leisten 16, in die der Statorblechkörper 2 eingehängt ist, nicht mehr direkt mit den Befestigungsplatten 15 verschweisst, sondern es sind elastische Glieder in Gestalt U-förmiger Zwischenplatten 25 zwischengeschaltet. Der eine Schenkel der Zwischenplatte 25 ist mit der einen Befestigungsplatte 15, der andere Schenkel mit der in Umfangsrichtung benachbarten Befestigungsplatte 15 verschweisst. Die Zwischenplatten 25 weisen in dem beide Schenkel verbindenden Teil eine schwalbemschwanzförmige Nut analog den Befestigungsplatten 15 der Figuren 3 und 4 auf, in welche die Leisten 16 einliegen. Durch Bemessung des Querschnitts des besagten Verindungsteils und seiner Geometrie sind die Zwischenplatten mehr oder weniger radial nachgiebig und ermöglichen auf diese Weise eine radial elastische Aufhängung des Statorblechkörpers 2 im Gehäusering 1. Die Versteifungs-und Kühlfunktion der Distanzelemente 14 wird dabei nicht beeinträchtigt.

### BEZEICHNUNGSLISTE

- 1: Gehäusering
- 2: Statorblechkörper
- 3: Teilblechkörper
- 4: radiale Kühlschlitze in 2
- 5: Blechsegmente
- 6: Pressplatten
- 7: Zugbolzen
- 8: Wickelköpfe
- 9: Nuten
- 10: kalottenseitiger Wickelkopfraum
- 11: turbinenseitiger Wickelkopfraum
- 12: Wicklungsverbindungen/Ableitungen
- 13: Ringraum zwischen 1 und 2
- 14: V-förmige Distanzelemente
- 141,142: Ringflansche
- 15: Befestigungsplatte
- 151: Zwischenplatte
- 152: trapezförmige Nut in 151
- 153: Spalt zwischen Nutgrund von 152 und 16
- 154: Nase an 151
- 16: Leisten
- 161: Rechtecknut in 16
- 162: Spalt zwischen Nutgrund von 161 und 154
- 17: erste Oeffungen in 14
- 18: Hohlräume in 14
- 19,20: zweite Oeffungen in 14
- 21: Aussenraum
- 22: Dichtplatten
- 23: dreieckförmige Durchbrüche in 14
- 24: dachartige Abdeckungen
- 25: radial elastische Zwischenplatten

- d₁,d₂: Spaltbreiten
- A: Aktivteil
- S: Spalt zwischen 151 und Statorblechkörper 2

## Patentansprüche

1. Rohrgenerator mit einem aus einer Kalotte und daran anschliessendem Gehäusering (1) bestehendem Gehäuse, mit einem Statorblechkörper (2), der von dem Gehäusering (1) umgeben und in diesem gehalten ist, der Statorblechkörper aus überlappend geschichteten Blechsegementen (5) aufgebaut ist und mittels axial verlaufenden Leisten (16) unter Zwischenschaltung von Distanzelementen an dem vom Triebwasser umspülten Gehäusering befestigt ist, wobei der Statorblechkörper aus einer Mehrzahl von gegeneinander distanzierten Teilblechkörpern (3) besteht und durch die Distanzen (4) zwischen den einzelnen Teilblechkörpern (3) radial nach aussen Kühlluft in den Raum (21) zwischen Statorblechkörper (2) und Gehäusering (1) und von dort aus zu Kühlern in der Kalotte führbar ist, dadurch gekennzeichnet, dass die Distanzelemente (14) als axial über die gesamte Länge des Statorblechkörpers (2) sich erstreckende Hohlkörper mit trapezförmigem, im Grenzfall V-förmigen Querschnitt ausgebildet sind bzw. zusammen mit der Innenwand des Gehäuseringes (1) einen solchen Hohlkörper bilden, wobei die breitere Basis besagter Hohlhörper radial aussen am Gehäusering (1) liegen bzw. der Gehäusering selbst diese Basis bildet, und dass an der schmäleren Basis besagter Hohlkörper (14) in Umfangsrichtung verlaufende Befestigungsplatten (15) zur Aufnahme der Leisten (16) vorgesehen sind, und dass ein Kühlmittel durch besagte Hohlkörper (14) hindurchleitbar ist.

2. Rohrgenerator nach Anspruch 1, dadurch gekennzeichnet, dass die Distanzelemente (14) seitlich mit ersten (17) und zweiten Oeffnungen (19) versehen sind, wobei die ersten Oeffnungen eine freie Verbindung zwischen dem Statorblechkörper (2) und dem Inneren (18) der Hohlkörper und die zweiten Oeffnungen (19) eine freie Verbindung zwischen dem Inneren (18) der Hohlkörper und den Strinseiten des Statorblechkörpers (2) bilden.

3. Rohrgenerator nach Anspruch 1, dadurch gekennzeichnet, dass die Hohlkörper (14) sich über die gesamte Länge und des sich daran anschliessenden Bereichs des Statorblechkörpers (2) erstrecken und benachbarte Hohlkörper (14) abwechselnd an einem und anderen Ende untereinander hydraulisch verbunden sind, derart, dass sich ein mäanderförmiger Kühlwasserfluss durch diese ergibt.

4. Rohrgenerator nach Anspruch 1, 2 oder 3, dadurch gekennzeichnet, dass die Leisten (16) unter Zwischenschaltung von Befestigungsplatten (15) direkt an den Distanzelementen (14) befestigt sind.

5. Rohrgenerator nach Anspruch 1, 2 oder3, dadurch gekennzeichnet, dass die Leisten (16) unter Zwischenschaltung von Befestigungsplatten (15) mittelbar an den Distanzelementen (14) befestigt sind.

6. Rohrgenerator nach Anspruch 5, dadurch gekennzeichnet, dass die Leisten (16) mit radialem Spiel, jedoch in Umfangsrichtung geführt an Zwischenplatten (151) angeordnet sind, welche Zwischenplatten (151) mit den Befestigungsplatten (15) fest verbunden sind.

7. Rohrgenerator nach Anspruch 6, dadurch gekennzeichnet, dass die Zwischenplatten (151) radial innen eine schwalbenschwanzartige Ausnehmung (152) aufweisen, in welcher eine Hälfte der Leiste (16) liegt, und dass die Leisten radial aussen eine Nut (161) mit Rechteckquerschnitt aufweisen, in welche eine an der Zwischenplatte (151) ausgebildete Nase (154) formschlüssig eingreift.

8. Rohrgenerator nach Anspruch 1, 2 oder 3, dadurch gekennzeichnet, dass die Leisten unter Zwischenschaltung von radial elastischen Federgliedern (25) in Form von Zwischenplatten an den Befestigungsplatten (15) und damit auch an den Distanzelementen (14) befestigt sind.

## Claims

1. Bulb-type generator having a housing comprising a spherical cap and a housing ring (1) adjoining the latter, and having a stator laminated body (2) which is surrounded by the housing ring (1) and held in the latter, the stator laminated body being constructed from overlappingly laminated segmental stampings (5) and being mounted on the housing ring, around which the motive water flows, by means of axially extending strips (16) with the interposition of spacer elements, the stator laminated body consisting of a plurality of mutually spaced component laminated bodies (3), and it being possible for cooling air to be led radially outwards through the spaces (4) between the individual component laminated bodies (3) into the space (21) between the stator laminated body (2) and housing ring (1) and out from there to coolers in the spherical cap, characterized in that the spacer elements (14) are designed as cavities extending axially over the entire length of the stator laminated body (2) and having a trapezoidal, in the limiting case V-shaped cross section, or form such a cavity together with the inner wall of the housing ring (1), the wider base of said cavities being situated radially outside on the housing ring (1), the housing ring itself forming this base, and there being provided on the narrower base of said cavities (14) mounting plates (15), extending in the circumferential direction, for accommodating the strips (16), and it being possible to conduct a coolant through said cavities (14).

2. Bulb-type generator according to Claim 1, characterized in that the spacer elements (14) are provided on the side with first openings (17) and second openings (19), the first openings forming a free connection between the stator laminated body (2) and the interior (18) of the cavities, and the second openings (19) forming a free connection between the interior (18) of the cavities and the end faces of the stator laminated body (2).

3. Bulb-type generator according to Claim 1, characterized in that the cavities (14) extend over the entire length and the region adjacent thereto of the stator laminated body (2), and neighbouring cavities (14) are alternately connected to one another hydraulically at one or the other end in such a way as to produce a meandering flow of cooling water through them.

4. Bulb-type generator according to Claim 1, 2 or 3, characterized in that the strips (16) are mounted directly on the spacer elements (14) with the interposition of mounting plates (15).

5. Bulb-type generator according to Claim 1, 2 or 3, characterized in that the strips (16) are mounted indirectly on the spacer elements (14) with the interposition of mounting plates (15).

6. Bulb-type generator according to Claim 5, characterized in that the strips (16) are arranged on intermediate plates (151) with radial play but guided in the circumferential direction, which intermediate plates (151) are permanently connected to the mounting plates (15).

7. Bulb-type generator according to Claim 6, characterized in that radially inwards the intermediate plates (151) have a swallowtailed recess (152) in which half of the strip (16) is situated, and radially outwards the strips have a groove (161) with a rectangular cross section in which a lug (154) constructed on the intermediate plate (151) engages in a self-closed fashion.

8. Bulb-type generator according to Claim 1, 2 or 3, characterized in that with the interposition of radially elastic spring members (25) in the form of intermediate plates the strips are mounted on the mounting plates (15) and thus also on the spacer elements (14).

## Revendications

1. Générateur tubulaire comprenant une carcasse se composant d'une calotte et d'une bague de carcasse (1) s'y raccordant, et un corps de tôles statorique (2) qui est entouré par la bague de carcasse (1) et maintenu dans celle-ci, le corps de tôles statorique étant construit à partir de segments de tôle (5) revêtus et superposés, et étant fixé au moyen de barres (16) s'étendant axialement en intercalant des éléments d'espacement sur la bague de carcasse autour de laquelle s'écoulent les eaux motrices, dans lequel le corps de tôles statorique se compose d'une pluralité de corps de tôle partiels (3) espacés les uns des autres et de l'air de refroidissement peut être guidé radialement vers l'extérieur à travers les distances (4) séparant les corps de tôle partiels individuels (3), dans l'espace (21) entre le corps de tôles statorique (2) et la bague de carcasse (1), puis de là vers des réfrigérants dans la calotte, caractérisé en ce que les éléments d'espacement (14) sont formés en tant que corps creux s'étendant axialement sur toute la longueur du corps de tôles statorique (2) avec une section transversale trapézoïdale, dans le cas limite en forme de V, respectivement forment conjointement avec la paroi interne de la bague de carcasse (1) un tel corps creux, la base la plus large desdits corps creux se trouvant radialement à l'extérieur sur la bague de carcasse (1) ou la bague de carcasse formant elle-même cette base, et en ce que sur la base la plus étroite desdits corps creux (14) sont prévues des plaques de fixation (15) s'étendant dans la direction périphérique, pour recevoir les barres (16), et en ce qu'un agent réfrigérant peut être conduit à travers lesdits corps creux (14).

2. Générateur tubulaire selon la revendication 1, caractérisé en ce que les éléments d'espacement (14) sont pourvus latéralement de premières (17) et deuxièmes (19) ouvertures, les premières ouvertures formant une connexion libre entre le corps de tôles statorique (2) et l'intérieur (18) des corps creux et les deuxièmes ouvertures (19) formant une connexion libre entre l'intérieur (18) des corps creux et les faces frontales du corps de tôles statorique (2).

3. Générateur tubulaire selon la revendication 1, caractérisé en ce que les corps creux (14) s'étendent sur toute la longueur et la zone s'y raccordant du corps de tôles statorique (2) et les corps creux voisins (14) sont reliés hydrauliquement les uns aux autres à l'une et l'autre extrémité de telle sorte qu'il en résulte un flux d'eau de refroidissement en méandre.

4. Générateur tubulaire selon la revendication 1, 2 ou 3, caractérisé en ce que les barres (16) sont fixées directement aux éléments d'espacement (14) en intercalant des plaques de fixation (15).

5. Générateur tubulaire selon la revendication 1, 2 ou 3, caractérisé en ce que les barres (16) sont fixées indirectement aux éléments d'espacement (14) en intercalant des plaques de fixation (15).

6. Générateur tubulaire selon la revendication 5, caractérisé en ce que les barres (16) sont disposées avec un jeu radial, mais toutefois guidées dans la direction périphérique sur des plaques intermédiaires (151), lesquelles plaques intermédiaires (151) sont fixement reliées aux plaques de fixation (15).

7. Générateur tubulaire selon la revendication 6, caractérisé en ce que les plaques intermédiaires (151) présentent radialement vers l'intérieur un évidement (152) en forme de queue d'aronde, dans lequel est reçue une moitié de la barre (16) et en ce que les barres présentent radialement à l'extérieur une encoche (161) de section transversale rectangulaire, dans laquelle un nez (154) formé sur la plaque intermédiaire (151) vient s'engager par engagement positif.

8. Générateur tubulaire selon la revendication 1, 2 ou 3, caractérisé en ce que les barres sont fixées sur les plaques de fixation (15) et donc aussi sur les éléments d'espacement (14) en intercalant des organes de ressort radialement élastiques (25) en forme de plaques intermédiaires.
